# EUROPEAN PATENT APPLICATION

(11) **EP 4 148 632 A1**
(43) Date of publication of application: **15.03.2023**
(21) Application number: 20934830.9
(22) Date of filing: 19.08.2020
(51) Int. Cl.: G06N 20/00

(54) **INFORMATION PROCESSING METHOD, INFORMATION PROCESSING DEVICE, AND INFORMATION PROCESSING PROGRAM**

(30) Priority: 04.05.2020 US 202063019515 P
(71) Applicant: Sony Group Corporation, Minato-Ku, Tokyo, 108-0075 (JP)
(72) Inventor: AKAMA, Taketo, Tokyo 141-0022 (JP)
(74) Representative: 2SPL Patentanwälte PartG mbB
(86) International application number: PCT/JP2020/031356
(87) International publication number: WO 2021/225008

(57) **Abstract**

An information processing method including generating, by using a plurality of features not in a concatenating relationship and using a trained model, new data obtained from the plurality of features having alterations, in which, when having received an input of the plurality of features, the trained model outputs the plurality of features having alterations.

## Description

### Field

The present disclosure relates to an information processing method, an information processing apparatus, and an information processing program.

### Background

For example, Patent Literature 1 discloses a method of changing a feature of each piece of partial data of one piece of music to generate another piece of music.

### Citation List

### Patent Literature

Patent Literature 1: WO 2020/080268 A

### Summary

### Technical Problem

It is sometimes difficult to prepare data, being generation source data, having the same amount of data as the data to be generated.

One aspect of the present disclosure proposes an information processing method, an information processing apparatus, and an information processing program capable of reducing the burden of data preparation.

### Solution to Problem

An information processing method according to one aspect of the present disclosure includes generating, by using a plurality of features not in a concatenating relationship and using a trained model, new data obtained from the plurality of features having alterations, wherein, when having received an input of the plurality of features, the trained model outputs the plurality of features having alterations.

An information processing apparatus according to one aspect of the present disclosure includes a generation unit that generates, by using a plurality of features not in a concatenating relationship and using a trained model, new data obtained from the plurality of features having alterations, wherein, when having received an input of the plurality of features, the trained model outputs the plurality of features having alterations.

An information processing program according to one aspect of the present disclosure causes a computer to function, to perform generating, by using a plurality of features not in a concatenating relationship and using a trained model, new data obtained from the plurality of features having alterations, wherein, when having received an input of the plurality of features, the trained model outputs the plurality of features having alterations. Brief Description of Drawings
FIG. 1 is a diagram illustrating an example of a schematic configuration of an information processing apparatus according to an embodiment.
FIG. 2 is a diagram illustrating an example of an input screen.
FIG. 3 is a diagram illustrating an example of an output screen.
FIG. 4 is a diagram illustrating an example of functional blocks of an information processing apparatus.
FIG. 5 is a diagram illustrating an example of a plurality of pieces of partial data.
FIG. 6 is a diagram illustrating an example of a schematic configuration of a trained model.
FIG. 7 is a diagram illustrating an example of preliminary training of an encoder.
FIG. 8 is a diagram illustrating an example of preliminary training of a discriminator and a generator.
FIG. 9 is a diagram illustrating an example of new data.
FIG. 10 is a flowchart illustrating an example of processing (information processing method) executed in the information processing apparatus.
FIG. 11 is a flowchart illustrating an example of generation of a trained model.
FIG. 12 is a diagram illustrating an example of a schematic configuration of a trained model.
FIG. 13 is a diagram illustrating an example of an input screen.
FIG. 14 is a diagram illustrating an example of a plurality of pieces of partial data.
FIG. 15 is a diagram illustrating an example of new data.
FIG. 16 is a diagram illustrating an example of an output screen.
FIG. 17 is a diagram illustrating an example of a schematic configuration of a trained model.
FIG. 18 is a diagram illustrating an example of an input screen.
FIG. 19 is a diagram illustrating an example of a hardware configuration of the information processing apparatus.

### Description of Embodiments

Embodiments of the present disclosure will be described below in detail with reference to the drawings. In each of the following embodiments, the same parts are denoted by the same reference symbols, and a repetitive description thereof will be omitted.

The present disclosure will be described in the following order.
1. Embodiments
2. Modifications
3. Effects

### 1. Embodiments

Hereinafter, an information processing apparatus that can be used in the information processing method according to an embodiment will be mainly described as an example. Examples of the processing-symmetric information include music data, language data, DNA sequence data, and image data. Examples of the music data include a music sequence such as symbolic music (symbol series), audio, and the like. Examples of languages include a document, a verse, and a programming language.

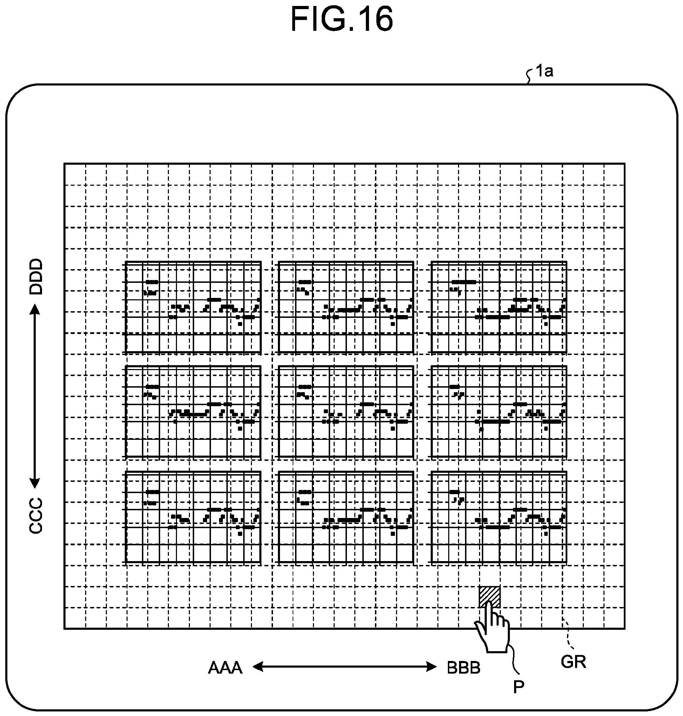

The information processing apparatus generates new data from a plurality of features having no concatenating relationship. The plurality of features having no concatenating relationship refers to, for example, a relationship that produces unnaturalness such as discontinuity in a case where the features are directly concatenated (such as continuously arranged and connected). An example of the plurality of features not in the concatenating relationship is the case of features when extraction source data (hereinafter, referred to as "partial data") of the features are not in the concatenating relationship. For example, a plurality of pieces of partial data continuously existing in the same data is considered to be in a concatenating relationship. Even in the same data, a plurality of pieces of partial data existing separated from each other to such an extent that there would be discontinuity or unnaturalness when being directly connected are not considered to be in a concatenating relationship. A plurality of pieces of partial data existing in different pieces of data are not considered to be in the concatenating relationship. Incidentally, the data length of the new data to be generated is longer than the data length of the partial data. In other words, the partial data has a data length shorter than the data length of the new data. Another example of the feature is a feature having no partial data being an extraction source data and is a feature sampled from a standard normal distribution N(0, I) as described below with reference to FIG. 16.

The preparation of each of the plurality of features having no concatenating relationship is often easier than a case, for example, where preparation of features of data having the same data amount as the new data is performed. This makes it possible to reduce the burden of data preparation.

The new data is data obtained from a plurality of features having alterations. The plurality of features with an alteration can be novel features that cannot be obtained by simply concatenating the individual features before the alteration while holding distinct characteristics of the plurality of features before the alteration. This can also reduce unnaturalness such as discontinuity that can occur when the individual features before the alteration are simply concatenated.

For example, in a case where partial data as extraction source data is present in any of a plurality of features, the new data will be data concatenating a plurality of pieces of partial data having been altered so as to enhance the fusibility (series concatenating fusion). The new data generated by such concatenating fusion can be novel data that could not be obtained by simply concatenating the partial data before the alteration while holding the distinct characteristics of the partial data before the alteration. This can also reduce unnaturalness such as discontinuity that can occur when individual partial data pieces before the alteration are simply concatenated. For example, by using a fragment of an idea as partial data, there is a possibility of generating a new idea from the fragment of the idea.

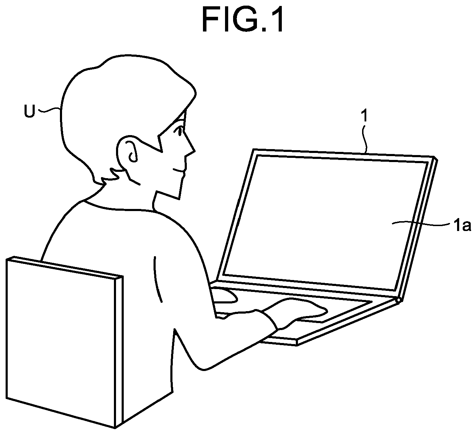

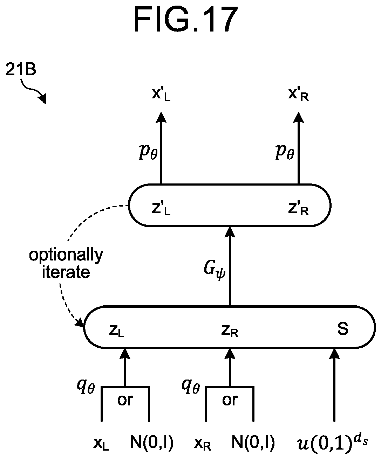

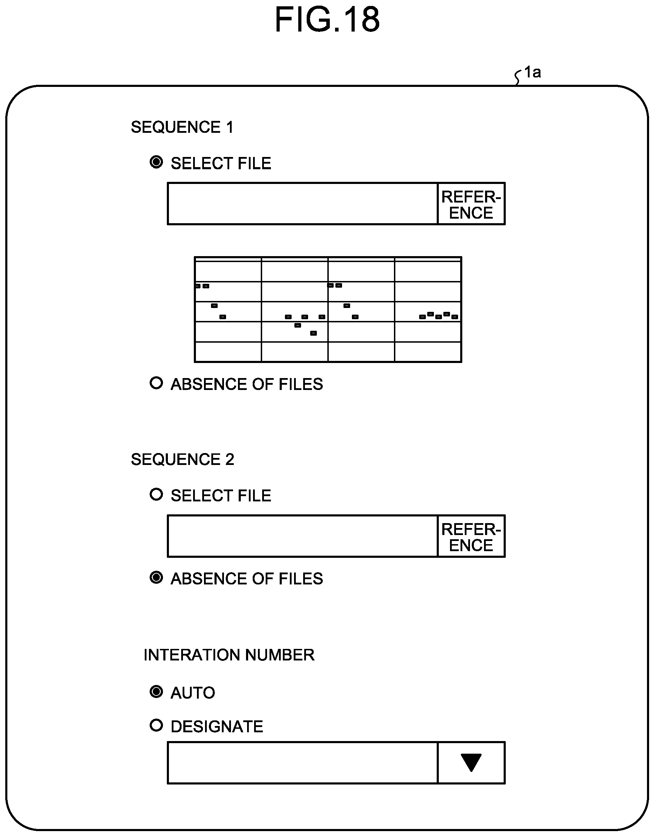

Hereinafter, an example of a feature in the presence of partial data as extraction source data will be described with reference to FIGS. 1 to 16. Thereafter, an example of the feature in the absence of the partial data as extraction source data will be described with reference to FIGS. 17 and 18. In the description, a music sequence will be used as an example of partial data.

FIG. 1 is a diagram illustrating an example of appearance of an information processing apparatus according to the embodiment. An information processing apparatus 1 is implemented by causing a general-purpose computer to execute a predetermined program (software), for example. In the example illustrated in FIG. 1, the information processing apparatus 1 is a laptop used by a user U. The display screen of the information processing apparatus 1 is referred to as a display screen 1a in the drawing. In addition to the laptop, the information processing apparatus 1 can be implemented by various devices such as a PC and a smartphone.

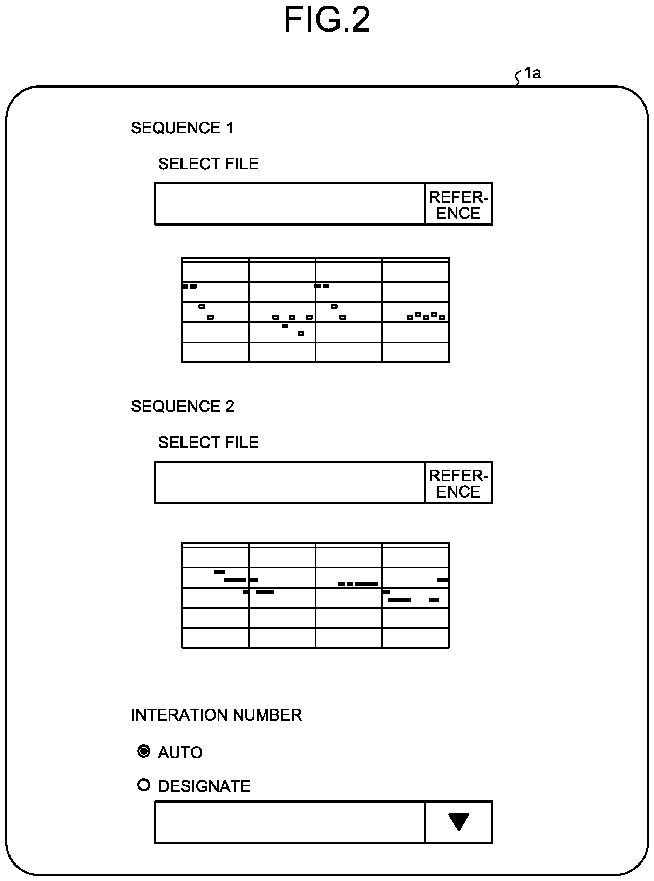

FIG. 2 is a diagram illustrating an example of an input screen. In this example, the user U inputs two music sequences. In the item "Sequence 1", the user U selects a file with reference to a folder or the like. The music sequence indicated in the selected file is displayed as visualized display. Similarly, in the item "Sequence 2", the user U selects a file with reference to a folder or the like. The music sequence indicated in the selected file is displayed as visualized display.

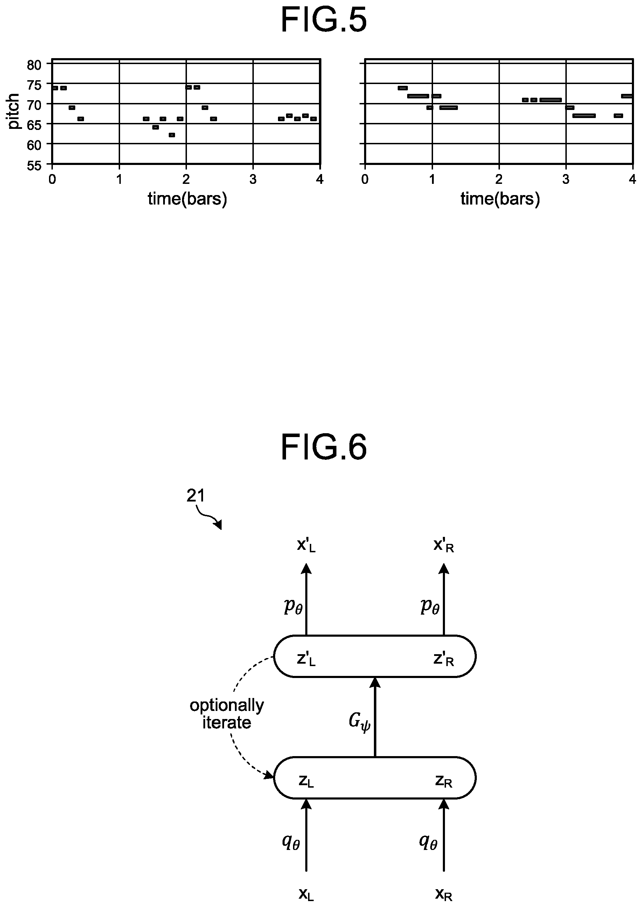

Furthermore, in the item "iteration number", the user U sets the iteration number. The iteration number relates to a degree of fusibility (degree of fusion) of two music sequences, and details are described below with reference to FIG. 6. In this example, the iteration number can be automatically set or designated. Here, it is assumed that the iteration number is set to 3.

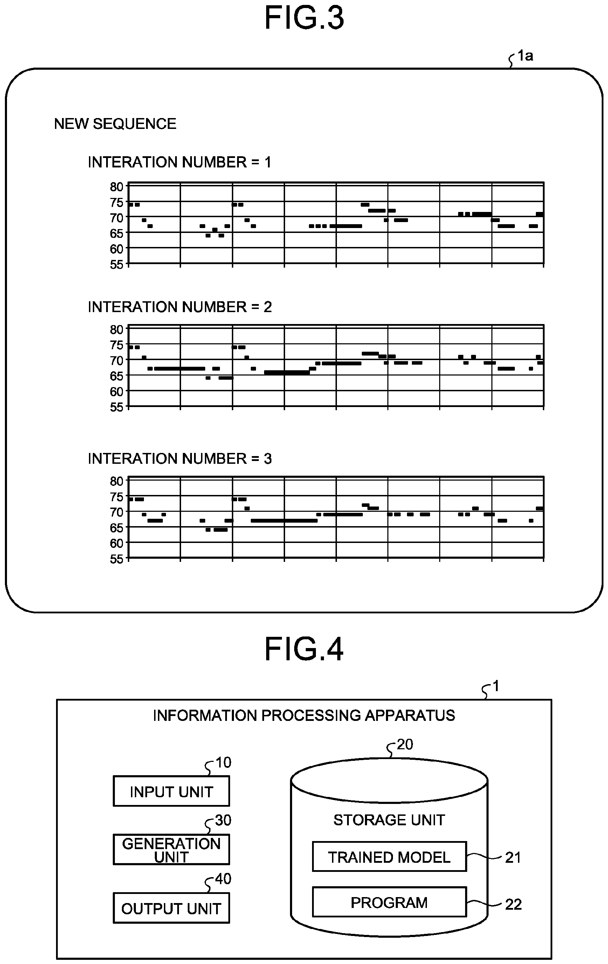

FIG. 3 is a diagram illustrating an example of an output screen. According to the iteration number set to 3 described above, three new sequences each corresponding to the iteration number 1 to 3 are displayed in visualized display. The new sequence may be a novel sequence that could not be obtained by simply concatenating Sequence 1 and Sequence 2. This can also reduce unnaturalness such as discontinuity that may occur when Sequence 1 and Sequence 2 are simply concatenated.

FIGS. 1 to 3 described above are merely examples of the appearance of the information processing apparatus 1 and the input/output screen configuration, and it is allowable to adopt any configuration capable of handling various input/output modes including the description below.

FIG. 4 is a diagram illustrating an example of functional blocks of the information processing apparatus. The information processing apparatus 1 includes an input unit 10, a storage unit 20, a generation unit 30, and an output unit 40.

The input unit 10 receives an input of a plurality of pieces of partial data. As described above, the plurality of pieces of partial data is a plurality of pieces of partial data not in a concatenating relationship. An example of data will be described with reference to FIG. 5.

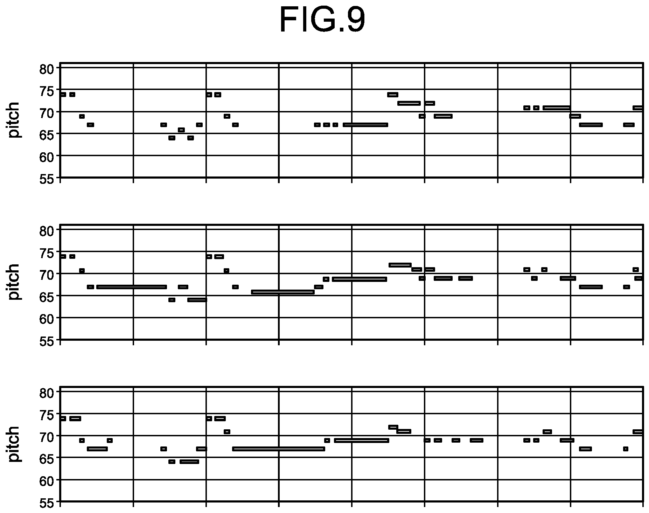

FIG. 5 is a diagram illustrating an example of a plurality of pieces of partial data. In this example, the plurality of pieces of partial data includes two music sequences represented by time and a pitch (MIDI pitch). In the figure, time (bars) represents a bar number. A data length (four bars in this example) of each piece of partial data is shorter than the data length of new data to be generated (eight bars in the example of FIG. 9 described below).

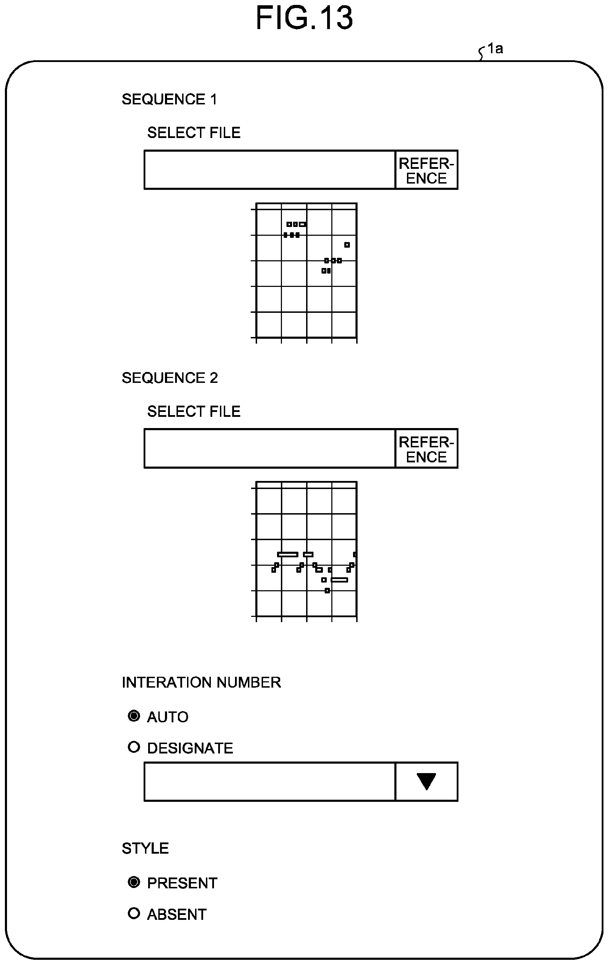

Returning to FIG. 4, the input unit 10 also receives inputs of the data indicating the iteration number described above with reference to FIG. 3, the data indicating the presence or absence of the style described below with reference to FIG. 13 (refer to FIG. 13 and the like), the setting data of a feature S described with reference to FIG. 16, and the like.

The storage unit 20 stores various types of information used in the information processing apparatus 1. Examples of the information include a trained model 21 and an information processing program 22. The trained model 21 will be described below. The information processing program 22 is a program for implementing processing executed in the information processing apparatus 1.

Based on the input result of the input unit 10, the generation unit 30 generates new data using a plurality of features and the trained model 21. Each of the plurality of features is a feature of each of the plurality of pieces of partial data, and is a feature in no concatenating relationship. The trained model 21 will be described with reference to FIGS. 6 to 8.

FIG. 6 is a diagram illustrating an example of a schematic configuration of a trained model. The trained model 21 includes an encoder qθ, a generator Gψ, and a decoder pθ.

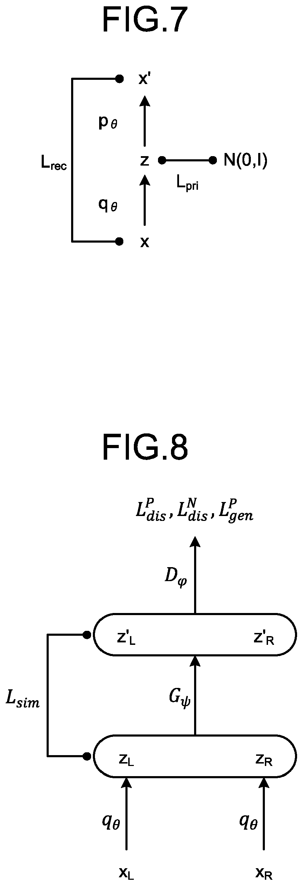

The encoder qθ extracts a feature Z_{L} and a feature Z_{R} of partial data X_{L} and the partial data X_{R}, respectively. The encoder qθ can be considered to be a conversion function that converts the partial data X_{L} and the partial data X_{R} into the feature Z_{L} and the feature Z_{R}, respectively. The feature Z_{L} and the feature Z_{R} indicate positions (points) in a multidimensional space. Such a multidimensional space is also referred to as a latent space, a latent feature space, or the like, and is hereinafter referred to as a latent space. The feature Z_{L} and the feature Z_{R} may be vectors. The encoder qθ is generated by performing preliminary training together with the decoder pθ. This will be described with reference to FIG. 7.

FIG. 7 is a diagram illustrating an example of preliminary training of an encoder and a decoder. Note that the encoder qθ and the decoder pθ illustrated in FIG. 7 are (provisional) encoders and decoders before completion of training, and are different from the trained encoders or decoders illustrated in FIG. 6 described above.

Referring to FIG. 7, both the encoder qθ and the decoder pθ are neural networks, and are generated by learning the feature Z of the partial data X, that is, learning the position in the latent space with a Variational Auto Encoder (VAE). The partial data X and the feature Z here can correspond to the partial data X_{L} and the partial data X_{R}, and the feature Z_{L} and the feature Z_{R}, respectively, described above with reference to FIG. 6. The encoder qθ and the decoder pθ of the VAE are implemented using a Recurrent Neural Network (RNN), for example. The encoder qθ extracts the feature Z of the partial data X. The decoder pθ reconstructs the feature Z as partial data X'.

FIG. 7 illustrates a loss L_{rec} and a loss Lₚᵣᵢ as loss functions, as examples. The loss L_{rec} is a reconfiguration error used to bring the partial data X' closer to the partial data X. The loss Lₚᵣᵢ is a prior error used to bring the distribution of the feature extracted by the encoder qθ, which is the distribution of the position in the multidimensional space, closer to the standard normal distribution N(0, I).

Returning to FIG. 6, when the feature Z_{L} and the feature Z_{R} have been input, the generator Gψ generates (outputs) a feature Z'_{L} and a feature Z'_{R}. The feature Z'_{L} and the feature Z'_{R} are features having been altered from the feature Z_{L} and feature Z_{R}, respectively. Note that changing the feature corresponds to moving the position of the feature in the latent space. The generator Gψ is generated by performing preliminary training together with the discriminator. This will be described with reference to FIG. 8.

FIG. 8 is a diagram illustrating an example of preliminary training on the discriminator and the generator. Note that the generator Gψ illustrated in FIG. 8 is a generator before completion of training (provisional generator), which is different from the trained generator Gψ illustrated in FIG. 6 described above.

Referring to FIG. 8, the generator Gψ receives the feature Z_{L} and the feature Z_{R} as inputs, and outputs (generates) the feature Z'_{L} and the feature Z'_{R}. A discriminator Dψ discriminates a concatenated feature (concatenated vector) of the feature Z'_{L} and the feature Z'_{R} generated by the generator Gψ. The generator Gψ and the discriminator Dψ are implemented using Generative Adversarial Networks (GANs). Examples of architectures are multilayer perceptrons, RNNs, transformers, and the like.

FIG. 8 illustrates loss functions such as a loss L^{p}_{dis}, a loss L^{N}_{dis}, a loss L^{p}_{gen}, and a loss Lₛᵢₘ, as examples. The loss L^{p}_{dis} is a loss function related to a positive instance of the discriminator Dψ. The loss L^{N}_{dis} is a loss function related to a negative instance of the discriminator Dψ. The loss L^{p}_{gen} is a loss function related to the generator Gψ. The loss Lₛᵢₘ is a loss function for bringing the feature Z'_{L} and the feature Z'_{R} close to the feature Z_{L} and the feature Z_{R}, respectively. By using these loss functions, the feature Z'_{L} remains associated with the feature Z_{L}, and the similarity between the feature Z'_{L} and the feature Z_{R} is maintained. In addition, the feature Z'_{R} remains related to the feature Z_{R}, and the similarity between the feature Z'_{R} and the feature Z_{R} is maintained. By maintaining the similarity, the distinct characteristics of the partial data X_{L} and the partial data X_{R} remain in the generated new data.

Training of the discriminator Dψ will be further described. In the training of the discriminator Dψ, gradient descent is used to discriminate between positive instance and negative instance. A cross entropy may be used as the error function. The positive instance and the negative instance will be described in order.

An example of a positive instance is a concatenated feature (concatenated vector) of a feature of a first half portion (for example, the first four bars) and a feature of a latter half portion (for example, the latter four bars) of a piece of data having the same data length as the data length (for example, eight bars) of the entire two pieces of partial data. Such a concatenated feature is a feature obtained by concatenating features of pieces of partial data having a concatenating relationship, that is, features having a concatenating relationship, and is thus appropriate as the purpose of generation.

Four examples will be given as negative instances. A first example is a concatenated feature, namely, a concatenation of features of two pieces of randomly sampled partial data. A second example is a concatenated feature, namely a concatenation of two features sampled from a standard normal distribution. The reason why these concatenated features are defined as negative instances is that these concatenated features are a result of simple concatenation of features of the two pieces of partial data that have not been in the concatenating relationship, that is, an automatic concatenation of features not in a concatenating relationship, and is thus against the purpose of generation.

A third example is a concatenated feature, namely, a concatenation of features generated by inputting the features of two pieces of partial data sampled in the above-described first example to the provisional generator Gψ. A fourth example is a concatenated feature, namely, a concatenation of features generated by inputting the features of two pieces of partial data sampled in the above-described second example to the provisional generator Gψ. These concatenated features are defined as negative instances for the adversarial learning in the GAN.

The training of the generator Gψ will be further described. In the training of the generator Gψ, the concatenated feature in the above-described first example and the concatenated feature in the above-described second example are input to the generator Gψ. The output of the generator Gψ is input to the discriminator Dψ, and a cross entropy error function is calculated with the output of the discriminator Dψ as a positive instance. Furthermore, a similarity error function between the feature Z and the feature Z' and a similarity error function between the feature Z_{R} and the feature Z'_{R} are calculated. An example of the similarity error function is a square error of both features. However, other similarity error functions may be used. An addition result of three error functions, namely, the cross entropy error function, the similarity error function between the feature Z_{L} and the feature Z'_{L}, and the error function between the feature Z_{R} and the feature Z'_{R}, is set as a final error function, and the parameter of the generator Gψ is updated by a gradient method.

Returning to FIG. 6, the decoder pθ reconstructs the feature Z'_{L} and the feature Z'_{R} as partial data X'_{L} and partial data X'_{R}, respectively. The decoder pθ can be defined as a conversion function that converts the feature Z'_{L} and the feature Z'_{R} into the partial data X'_{L} and the partial data X'_{R}, respectively.

The generation unit 30 concatenates the partial data X'_{L} and the partial data X'_{R} to generate new data.

In FIG. 6, "optionally iterate" indicates that the generation unit 30 may not only use the output result of the generator Gψ for generating new data but also optionally return the output result to the input of the generator Gψ. By iterating execution of the generation by the generator Gψ, the feature can be further altered. Assuming that the number of times of generation by the generator Gψ is the iteration number, the larger the iteration number, the larger the degree of fusion of the feature Z'_{L} and the feature Z'_{R} with respect to the feature Z_{L} and the feature Z_{R}, respectively, with the result of higher degree of fusion of the partial data X'_{L} and the partial data X'_{R} in the new data. Therefore, the same number of pieces of different new data as the iteration number are generated.

Returning to FIG. 2, the output unit 40 outputs the new data generated by the generation unit 30. An example of data will be described with reference to FIG. 9.

FIG. 9 is a diagram illustrating an example of new data. This example illustrates three pieces of new data corresponding to three types of iteration number. Each piece of new data has a data length of eight bars, that is, the same data length as the entire data length of the plurality of pieces of input partial data (FIG. 5). The music sequence of the first four bars is a music sequence having been altered from the original music sequence (left side in FIG. 5). The latter four bars of the music sequence is a music sequence having been altered from the original music sequence (right side in FIG. 5). The iteration number of the three pieces of new data sequentially displayed in the vertical direction increases from the top to the bottom, with an increased degree of alteration from the original music sequence and an increased the degree of fusion.

As described above with reference to FIG. 3, the output unit 40 may display the new data and the iteration number in association with each other. This enables confirmation of the iteration number and generation of new data using another iteration number.

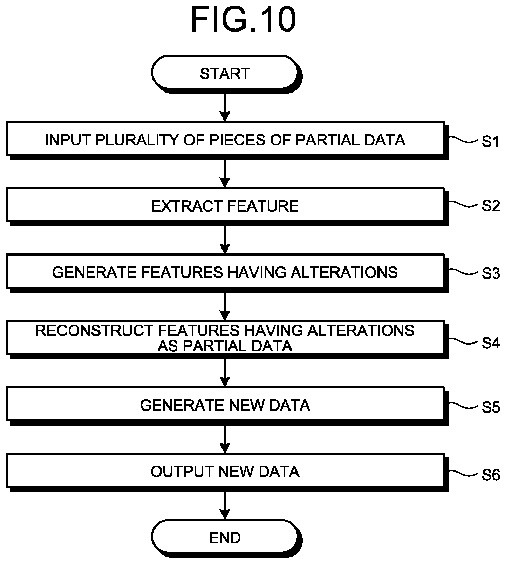

FIG. 10 is a flowchart illustrating an example of processing (information processing method) executed in the information processing apparatus.

In step S1, a plurality of pieces of partial data is input. For example, as described above with reference to FIG. 2, two music sequences are input so as to be received by the input unit 10. The two input music sequences correspond to the partial data X_{L} and the partial data X_{R} described above. Note that other data such as the iteration number may also be input to the input unit 10.

In step S2, features are extracted. For example, the generation unit 30 extracts the feature Z_{L} and the feature Z_{R} of the partial data X_{L} and the partial data X_{R}, which have been input in the previous step S1, using the encoder qθ of the trained model 21.

In step S3, features having alterations are generated. For example, using the generator Gψ of the trained model 21, the generation unit 30 generates the feature Z'_{L} and the feature Z'_{R} having been altered from the feature Z_{L} and the feature Z_{R} respectively, extracted in the previous step S2.

In step S4, the features having alterations are reconstructed as partial data. For example, using the decoder pθ of the trained model 21, the generation unit 30 reconstructs the feature Z'_{L} and the feature Z'_{R} generated in the previous step S3 as the partial data X'_{L} and the partial data X'_{R}, respectively.

In step S5, new data is generated. For example, the generation unit 30 generates new data by concatenating the partial data X'_{L} and the partial data X'_{R} obtained in the previous step S4.

In step S6, new data is output. For example, the output unit 40 outputs the new data as described above with reference to FIGS. 3 and 9. There may be an output mode as described below with reference to FIG. 16 and the like.

Completion of the processing of step S6 ends the processing of the flowchart. New data can be generated in this manner, for example.

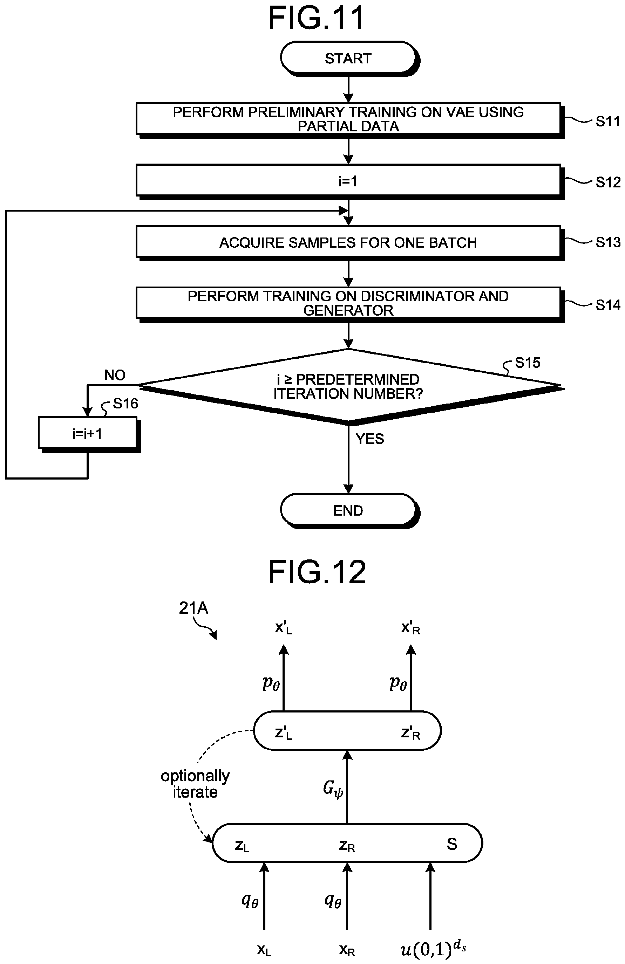

An example of a procedure for generating the trained model 21 will be described with reference to FIG. 11.

FIG. 11 is a flowchart illustrating an example of generation of a trained model.

In step S11, the VAE is trained using the partial data. For example, as described above with reference to FIG. 7, training using the partial data X is performed to generate the encoder qθ and the decoder pθ.

In step S12, the value of a variable i is set to 1. The variable i is used to repeat the processing of step S13 and step S14 described below by a predetermined iteration number. The iteration number may be appropriately set within a range of an assumable iteration number.

In step S13, samples for one batch are acquired. The sample is a mini-batch sample, for example, and is an example of training data used for training the discriminator Dψ and the generator Gψ beforehand. For example, in a case where one batch corresponds to 100 pieces of data, 100 groups of positive instances and negative instances as described above with reference to FIG. 8 are prepared.

In step S14, training of the discriminator and the generator is performed. That is, the discriminator Dψ and the generator Gψ are trained using the VAE trained in the previous step S11 and the sample for one batch acquired in the previous step S12. The training may also use features sampled from the standard normal distribution N(0, I). This leads to generation of the generator Gψ capable of coping with a feature that is difficult to be obtained from data created by a human. Such a feature is highly likely to be input to the generator Gψ when the iteration number is two or more, and is particularly meaningful for learning in this sense.

Step S15 determines whether the variable i is a predetermined iteration number or more. In a case where the variable i is the predetermined iteration number or more (step S15: Yes), the process of the flowchart ends. Otherwise (Step S15: No), the process proceeds to step S16.

In step S16, the value of the variable i is incremented by 1, and the process returns to step S13.

The trained model 21 can be generated as described above, for example.

One embodiment of the present disclosure has been described above. The present disclosure is not limited to the above embodiment. Some modifications will be described.

### 2. Modifications

The above embodiment is an example using only the feature Z_{L} and the feature Z_{R}. However, in addition to the feature Z_{L} and the feature Z_{R}, it is also allowable to use an additional feature that gives directionality of alteration of the feature Z_{L} and the feature Z_{R}. This will be described with reference to FIGS. 12 to 15.

FIG. 12 is a diagram illustrating an example of a schematic configuration of a trained model. A trained model 21A illustrated in FIG. 12 is different from the trained model 21 (FIG. 6) in that not only the feature Z_{L} and the feature Z_{R} but also a feature S is input to the generator Gψ. The feature S is a feature (vector) sampled from a multidimensional distribution u(0, 1)^{ds}, and indicates a position (point) in a latent space similarly to the feature Z_{L} and the feature Z_{R}. Note that ds of the multidimensional distribution u(0, 1)^{ds} indicates the number of dimensions.

Resulting from the input of the feature S to the generator Gψ, changes arise in the feature Z'_{L} and the feature Z'_{R}. Changes also arise in the partial data X'_{L} and the partial data X'_{R}, and in the new data which is the concatenated data of these pieces of data. For example, when the position of the feature S is moved in a certain direction in the latent space of the feature S, a tendency of a certain change arising in the new data becomes apparent or latent. When the feature S is moved in another direction in the latent space, a tendency of another change arising in the new data becomes apparent or latent. Such a feature S can be considered as a feature (style space vector) that imparts variations to the style of the generated new data.

The training of the trained model 21A is different from the generation of the trained model 21 in that the feature S is input to the generator Gψ together with the feature Z_{L} and the feature Z_{R}. That is, at the time of training, the feature sampled from the multidimensional distribution u(0, 1)^{ds} is concatenated with the concatenated feature in the first example described above, and then the result is input to the generator Gψ. In addition, the feature sampled from the multidimensional distribution u(0, 1)^{ds} is concatenated with the concatenated feature in the second example described above, and then the result is input to the generator Gψ. In the flowchart illustrated in FIG. 11 described above, step S14 is altered so as to be adapted to the training of the trained model 21A. When the feature Z_{L}, the feature Z_{R}, and the feature S have been input, the generated trained model 21A outputs the feature Z'_{L} and the feature Z'_{R}.

The generation procedure of the new data by the generation unit 30 is also altered so as to be adapted to use of the trained model 21A. In the flowchart illustrated in FIG. 10 described above, the generation unit 30 generates, in step S3, the feature Z'_{L} and the feature Z'_{R} using the feature S in addition to the generator Gψ, of the trained model 21A as well as the feature Z_{L}, and the feature Z_{R}.

An example of input and output when using the trained model 21A will be described with reference to FIGS. 13 to 16.

FIG. 13 is a diagram illustrating an example of an input screen. As compared to FIG. 2 described above, the item "style" is added. A user U selects the presence or absence of a style. As described above, data indicating the presence or absence of the style is also input to the input unit 10 (FIG. 4). In a case where the presence of the style is selected, for example, a predetermined number of the above-described features S is used to generate new data. This example assumes the use of nine features S.

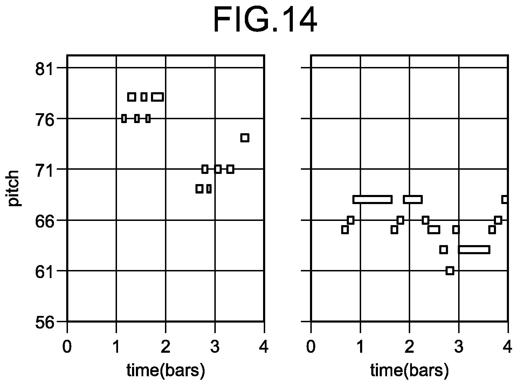

FIG. 14 is a diagram illustrating an example of a plurality of pieces of partial data. Similarly to the above-described examples, two music sequences are illustrated. The data length of each music sequence is four bars.

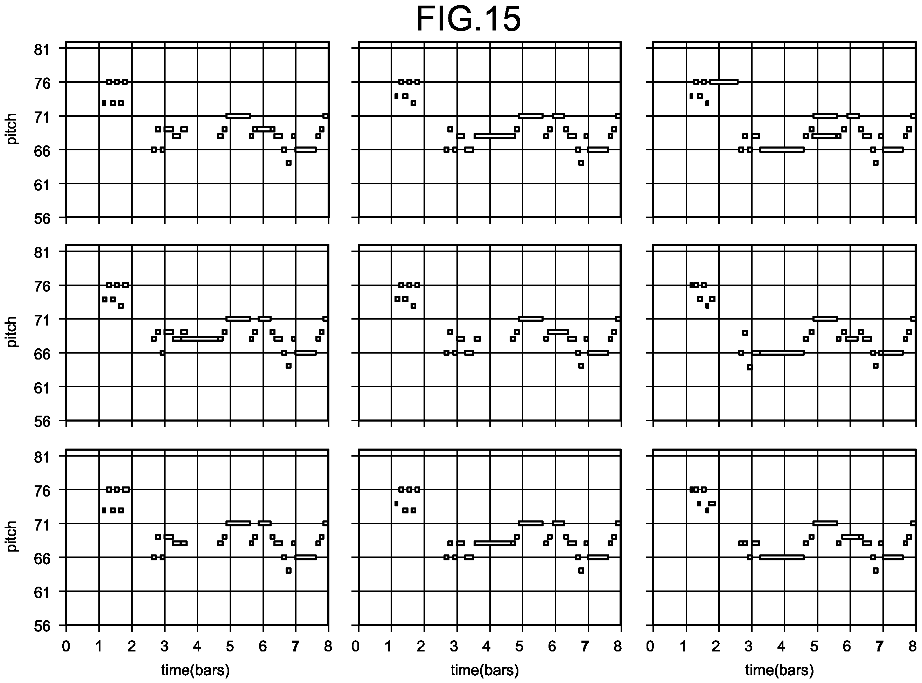

FIG. 15 is a diagram illustrating an example of new data. The figure illustrates nine pieces of new data corresponding to different features S as examples. Each piece of new data is a music sequence having a data length of eight bars. This data length of eight bars is the total data length of the data lengths of the two input music sequences. The music sequence of the first four bars is a music sequence having been altered from the original music sequence (left side in FIG. 14). The latter four bars of the music sequence is a music sequence having been altered from the original music sequence (right side in FIG. 14).

In a case where the trained model 21A is used, the output unit 40 (FIG. 4) may display the new data and the feature S in association with each other. This makes it possible for the user U to grasp the relationship between the change arising in the new data and the feature S. The output unit 40 may display the new data and the feature S in association with each other in a mode that enables the user U to designate the feature S. This makes it possible for the user U to generate new data using the feature S other than the feature S of the displayed new data. An example of the output screen will be described with reference to FIG. 16.

FIG. 16 is a diagram illustrating an example of an output screen. The nine pieces of new data are displayed in association with the feature S, more specifically, the position of the feature S on a certain two-dimensional plane in the latent space. The arrow extending in the left-right direction is provided, at both ends, with a display of a label AAA and a label BBB. The label AAA indicates a tendency of a change that arises in the new data when the feature S is moved in the left direction on the two-dimensional plane. Examples of the indication of the label include a mood of music (bright, sad, etc.), chord progression, and the like. The indication of such a label is obtained by analyzing each piece of new data, for example. The analysis may be performed by the output unit 40 or the generation unit 30.

Regarding other labels, the label BBB indicates a tendency of a change when the feature S is moved in the right direction on the two-dimensional plane. Similarly, a label CCC and a label DDD are displayed at both ends of the arrow extending in the vertical direction. The label CCC indicates a tendency of a change when the feature S is moved downward on the two-dimensional plane. The label DDD indicates a change tendency when the feature S is moved upward on the two-dimensional plane.

In a case where new data corresponding to the feature S on another two-dimensional plane in the latent space has also been generated, it is allowable to perform switching to the display that associates the new data with the feature S.

The example illustrated in FIG. 16 uses grid lines GR displayed to section a two-dimensional plane. By selecting the portion divided by the grid line GR with a pointer P, the user U can set the feature S corresponding to the selected position. The setting data of the feature S is also input to the input unit 10 (FIG. 4). This makes it possible to newly generate and output new data using the set feature S.

The new data may be associated with both factors, namely, the feature S and the iteration number. In this case, the association of both factors may be displayed simultaneously. For example, display may be performed such that one factor corresponds to the screen planar direction and the other factor corresponds to the screen depth direction.

The above-described embodiment is an example in which the features of the partial data X_{L} and the partial data X_{R} are input to the generator Gψ. Alternatively, a feature sampled from the standard normal distribution may be used instead of the partial data X_{L} and/or the partial data X_{R}. This will be described with reference to FIG. 17.

FIG. 17 is a diagram illustrating an example of a schematic configuration of a trained model. A trained model 21B illustrated in FIG. 17 is different from the trained model 21A (FIG. 12) in that a feature sampled from a standard normal distribution N(0, I) can be used instead of at least one of the feature of the partial data X_{L} or the feature of the partial data X_{R}.

By using the features sampled from the standard normal distribution N(0, I) as the feature Z_{L} and/or the feature Z_{R}, it is possible to generate new data even when there is no input of the partial data X_{L} and/or the partial data X_{R}. As described above in step S14 of FIG. 11, the trained model 21B is trained by also inputting a feature sampled from the standard normal distribution N(0, I) to the generator Gψ.

The generation procedure of the new data by the generation unit 30 is altered to be adapted to use of the trained model 21B. In step S2 in the flowchart illustrated in FIG. 10 described above, sampling of features from the standard normal distribution N(0, I) can be performed instead of extracting features of the partial data X_{L} and/or the partial data X_{R}.

An example of an input screen when using the trained model 21B will be described with reference to FIG. 18.

FIG. 18 is a diagram illustrating an example of an input screen. As compared with FIG. 2 described above, the item "sequence 1" and the item "sequence 2" allows selection of Absence of Files, in addition to Select File. The results of these selections are also input to the input unit 10 (FIG. 4). When Absence of Files is selected in the item "sequence 1", a feature sampled from the standard normal distribution N(0, I) is used as the feature Z_{L}. When Absence of Files is selected in the item "sequence 2", a feature sampled from the standard normal distribution N(0, I) is used as the feature Z_{R}. Accordingly, preparation of partial data becomes unnecessary by this operation.

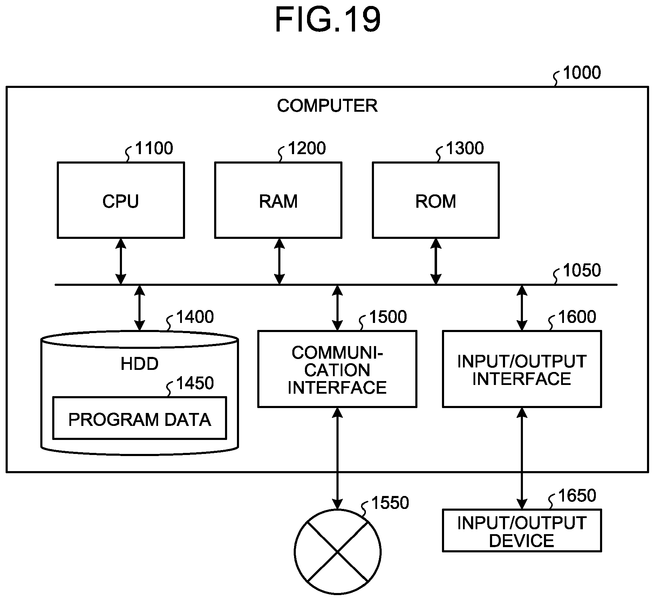

Finally, a hardware configuration of the information processing apparatus 1 will be described with reference to FIG. 19.

FIG. 19 is a diagram illustrating an example of a hardware configuration of the information processing apparatus. In this example, the information processing apparatus 1 is implemented by a computer 1000. The computer 1000 includes a CPU 1100, RAM 1200, read only memory (ROM) 1300, a hard disk drive (HDD) 1400, a communication interface 1500, and an input/output interface 1600. Individual components of the computer 1000 are interconnected by a bus 1050.

The CPU 1100 operates based on a program stored in the ROM 1300 or the HDD 1400 so as to control each of components. For example, the CPU 1100 develops the program stored in the ROM 1300 or the HDD 1400 into the RAM 1200 and executes processing corresponding to various programs.

The ROM 1300 stores a boot program such as a basic input output system (BIOS) executed by the CPU 1100 when the computer 1000 starts up, a program dependent on hardware of the computer 1000, or the like.

The HDD 1400 is a non-transitory computer-readable recording medium that records a program executed by the CPU 1100, data used by the program, or the like. Specifically, the HDD 1400 is a recording medium that records an information processing program according to the present disclosure, which is an example of program data 1450.

The communication interface 1500 is an interface for connecting the computer 1000 to an external network 1550 (for example, the Internet). For example, the CPU 1100 receives data from other devices or transmits data generated by the CPU 1100 to other devices via the communication interface 1500.

The input/output interface 1600 is an interface for connecting an input/output device 1650 with the computer 1000. For example, the CPU 1100 receives data from an input device such as a keyboard or a mouse via the input/output interface 1600. In addition, the CPU 1100 transmits data to an output device such as a display, a speaker, or a printer via the input/output interface 1600. Furthermore, the input/output interface 1600 may function as a media interface for reading a program or the like recorded on predetermined recording medium (or simply medium). Examples of the media include optical recording media such as a digital versatile disc (DVD) or a phase change rewritable disk (PD), a magneto-optical recording medium such as a magneto-optical disk (MO), a tape medium, a magnetic recording medium, and semiconductor memory.

For example, when the computer 1000 functions as the information processing apparatus 1, the CPU 1100 of the computer 1000 executes the information processing program loaded on the RAM 1200 so as to implement the functions of the generation unit 30 and the like. Furthermore, the HDD 1400 stores the program according to the present disclosure (information processing program 22 in the storage unit 20) or data in the storage unit 20. While the CPU 1100 executes the program data 1450 read from the HDD 1400, the CPU 1100 may acquire these programs from another device via the external network 1550, as another example.

The above-described embodiment is an example of using two features Z_{L} and Z_{R} as the plurality of features. Alternatively, three or more features may be used. The number of pieces of partial data may also be three or more.

The above-described embodiment is an example in which the feature S is also used in the form (FIG. 17) selectively using the feature sampled from the standard normal distribution N(0, I). Alternatively, a feature sampled from the standard normal distribution N(0, I) may be selectively use in a form not using the feature S (FIG. 6 and the like).

The above-described embodiment is an example of generating a music sequence. Alternatively, it is also allowable to generate, in addition to this, any data such as music such as audio, a language such as a document, a verse, and a programming language, a DNA sequence, an image, and the like as described at the beginning of this description.

Some functions of the information processing apparatus 1 may be implemented outside the information processing apparatus 1 (for example, an external server). In that case, the information processing apparatus 1 may have some or all of the functions of the storage unit 20 and the generation unit 30 in the external server. With the communication on the information processing apparatus 1 with the external server, the processes of the information processing apparatus 1 described above can be similarly implemented.

### 3. Effects

The embodiment described above is specified as follows, for example. As described with reference to FIGS. 4, 6, 10, and the like, the information processing method uses the plurality of features (the feature Z_{L} and the feature Z_{R}) not in the concatenating relationship and the trained model 21 and generates new data obtained from the plurality of features having alterations (the feature Z'_{L} and the feature Z'_{R}) (steps S2 to S5). Having received an input of a plurality of features, the trained model 21 (specifically, the generator Gψ thereof) outputs a plurality of features having alterations.

According to the above information processing method, the new data is generated using the plurality of features not in the concatenating relationship and using the trained model. The preparation of each of the plurality of features having no concatenating relationship is often easier than a case, for example, where preparation of features of data having the same data amount as the new data is performed. This makes it possible to reduce the burden of data preparation. In addition, the plurality of features with an alteration can be novel features that could not be obtained by simply concatenating the individual features before the alteration while holding distinct characteristics of the plurality of features before the alteration. This can also reduce unnaturalness such as discontinuity that can occur when the individual features before the alteration are simply concatenated.

As described with reference to FIGS. 5, 6, 9, and the like, the plurality of features may include features (features Z_{L} and/or features Z_{R}) extracted from partial data (partial data X_{L} and/or partial data X_{R}) having a data length shorter than the data length of the new data. The plurality of features may each be features (features Z_{L} and Z_{R}) respectively extracted from partial data (partial data X_{L} and partial data X_{R}) having a data length shorter than the data length of the new data. In this case, the new data may have the same data length as the total data length of pieces of partial data corresponding to each of the plurality of features. This makes it possible to reduce the burden of preparation of partial data. The new data to be generated can be novel data that could not be obtained by simply concatenating the partial data before the alteration while holding the distinct characteristics of the partial data. This can also reduce unnaturalness such as discontinuity that can occur when individual partial data pieces are simply concatenated.

As described with reference to FIG. 6 and the like, the output result of the trained model 21 (specifically, the generator Gψ thereof) and the trained model 21 (specifically, the generator Gψ thereof) may be used to generate new data obtained from a plurality of features having further alterations. This makes it possible to further increase the degree of fusion in the new data, for example, the fusibility of the partial data X'_{L} and the partial data X'_{R}.

As described with reference to FIGS. 3 and 9 and the like, the generated new data and the number of times of alterations (iteration number) of the plurality of features by (specifically, the generator Gψ thereof) the trained model 21 may be displayed in association with each other. This enables confirmation of the iteration number and generation of new data using another iteration number, for example.

As described with reference to FIG. 12 and the like, the new data may be generated using the additional feature (feature S) that gives directionality in the alteration of the plurality of features (feature Z_{L} and feature Z_{R}). Having received inputs of the plurality of features and the additional feature, the trained model 21A used in this case outputs the plurality of features having alterations (the feature Z'_{L} and the feature Z'_{R}). This makes it possible to impart variations to the style of the generated new data.

As described with reference to FIG. 16 and the like, the generated new data and the directionality of alteration given by the additional feature (feature S) may be displayed in association with each other. In addition, the additional feature other than the additional feature corresponding to the generated new data may be displayed so as to be able to be designated. This makes it possible to generate further new data using the additional feature.

As described with reference to FIG. 17 and the like, the plurality of features (the feature Z_{L} and the feature Z_{R}) may include features sampled from the standard normal distribution N(0, I). The feature sampled from the standard normal distribution N(0, I) may be used instead of the feature extracted from partial data (partial data X_{L} and partial data X_{R}) having a data length shorter than the data length of the new data. This makes it possible to generate new data even when there is no input of the partial data X_{L} or the partial data X_{R}. This makes it possible to further reduce the burden of data preparation.

The information processing apparatus 1 described with reference to FIG. 4 and the like is also an aspect of the present disclosure. That is, the information processing apparatus 1 includes the generation unit 30 that generates new data obtained from the plurality of features having alterations (the feature Z'_{L} and the feature Z'_{R}) using the plurality of features (the feature Z_{L} and the feature Z_{R}) not in the concatenating relationship and using the trained model 21. Furthermore, the information processing program 22 described with reference to FIGS. 4, 19, and the like is also an aspect of the present disclosure. That is, the information processing program 22 is an information processing program for causing the computer 1000 to function, and causes the computer 1000 to execute generating new data obtained from the plurality of features having alterations (the feature Z'_{L} and the feature Z'_{R}) by using the plurality of features (the feature Z_{L} and the feature Z_{R}) not in the concatenating relationship and using the trained model 21. The information processing apparatus 1 and the information processing program 22 can also achieve an effect of being able to reduce the burden of data preparation and the like, similarly to the above-described information processing method.

Note that the effects described in the present disclosure are merely examples and are not limited to the disclosed contents. There may be other effects.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

Note that the present technique can also have the following configurations.
(1) An information processing method comprising
   generating, by using a plurality of features not in a concatenating relationship and using a trained model, new data obtained from the plurality of features having alterations,
   wherein, when having received an input of the plurality of features, the trained model outputs the plurality of features having alterations.
(2) The information processing method according to (1),
   wherein the plurality of features includes features extracted from partial data having a data length shorter than a data length of the new data.
(3) The information processing method according to claim (1) or (2),
   wherein each of the plurality of features is a feature extracted from partial data having a data length shorter than a data length of the new data, and
   the new data has the same data length as a total data length of each piece of partial data corresponding to each of the plurality of features.
(4) The information processing method according to any one of (1) to (3), further comprising
   generating the new data obtained from the plurality of features having further alterations, the generation of the new data performed using an output result of the trained model and using the trained model.
(5) The information processing method according to (4), further comprising
   displaying the new data that has been generated and the number of times of alterations of the plurality of features by the trained model, in association with each other.
(6) The information processing method according to any one of (1) to (5), further comprising
   generating the new data by also using an additional feature that gives directionality of alteration of the plurality of features,
   wherein, when having received an input of the plurality of features and the additional feature, the trained model outputs the plurality of features having alterations.
(7) The information processing method according to (6), further comprising
   displaying the new data that has been generated and the directionality of the alteration given by the additional feature, in association with each other.
(8) The information processing method according to (6) or (7), further comprising
   displaying the additional feature other than the additional feature corresponding to the new data that has been generated, the displaying performed so as to be able to be designated.
(9) The information processing method according to any one of (1) to (8),
   wherein the plurality of features includes features sampled from a standard normal distribution.
(10) The information processing method according to (9), wherein
   a feature sampled from the standard normal distribution is used instead of a feature extracted from partial data having a data length shorter than a data length of the new data.
(11) An information processing apparatus comprising
   a generation unit that generates, by using a plurality of features not in a concatenating relationship and using a trained model, new data obtained from the plurality of features having alterations,
   wherein, when having received an input of the plurality of features, the trained model outputs the plurality of features having alterations.
(12) An information processing program for causing a computer to function, the information processing program comprising
   causing the computer to perform
   generating, by using a plurality of features not in a concatenating relationship and using a trained model, new data obtained from the plurality of features having alterations,
   wherein, when having received an input of the plurality of features, the trained model outputs the plurality of features having alterations.

### Reference Signs List

- 1: INFORMATION PROCESSING APPARATUS
- 1a: DISPLAY SCREEN
- 10: INPUT UNIT
- 20: STORAGE UNIT
- 21: TRAINED MODEL
- 22: INFORMATION PROCESSING PROGRAM
- 30: GENERATION UNIT
- 40: OUTPUT UNIT

## Claims

1. An information processing method comprising
generating, by using a plurality of features not in a concatenating relationship and using a trained model, new data obtained from the plurality of features having alterations,
wherein, when having received an input of the plurality of features, the trained model outputs the plurality of features having alterations.

2. The information processing method according to claim 1,
wherein the plurality of features includes features extracted from partial data having a data length shorter than a data length of the new data.

3. The information processing method according to claim 1,
wherein each of the plurality of features is a feature extracted from partial data having a data length shorter than a data length of the new data, and
the new data has the same data length as a total data length of each piece of partial data corresponding to each of the plurality of features.

4. The information processing method according to claim 1, further comprising
generating the new data obtained from the plurality of features having further alterations, the generation of the new data performed using an output result of the trained model and using the trained model.

5. The information processing method according to claim 4, further comprising
displaying the new data that has been generated and the number of times of alterations of the plurality of features by the trained model, in association with each other.

6. The information processing method according to claim 1, further comprising
generating the new data by also using an additional feature that gives directionality of alteration of the plurality of features,
wherein, when having received an input of the plurality of features and the additional feature, the trained model outputs the plurality of features having alterations.

7. The information processing method according to claim 6, further comprising
displaying the new data that has been generated and the directionality of the alteration given by the additional feature, in association with each other.

8. The information processing method according to claim 6, further comprising
displaying the additional feature other than the additional feature corresponding to the new data that has been generated, the displaying performed so as to be able to be designated.

9. The information processing method according to claim 1,
wherein the plurality of features includes features sampled from a standard normal distribution.

10. The information processing method according to claim 9, wherein
a feature sampled from the standard normal distribution is used instead of a feature extracted from partial data having a data length shorter than a data length of the new data.

11. An information processing apparatus comprising
a generation unit that generates, by using a plurality of features not in a concatenating relationship and using a trained model, new data obtained from the plurality of features having alterations,
wherein, when having received an input of the plurality of features, the trained model outputs the plurality of features having alterations.

12. An information processing program for causing a computer to function, the information processing program comprising
causing the computer to perform
generating, by using a plurality of features not in a concatenating relationship and using a trained model, new data obtained from the plurality of features having alterations,
wherein, when having received an input of the plurality of features, the trained model outputs the plurality of features having alterations.
